# EUROPEAN PATENT SPECIFICATION

(11) **EP 1 680 576 B1**
(45) Date of publication and mention of the grant of the patent: **06.01.2010**
(21) Application number: 04794648.8
(22) Date of filing: 08.10.2004
(51) Int. Cl.: F01K 1/00

(54) **RECIPROCATING COMPRESSOR WITH ENLARGED VALVE SEAT AREA**
HUBKOLBENVERDICHTER MIT VERGRÖSSERTEM VENTILSITZBEREICH
COMPRESSEUR ALTERNATIF A SIEGE DE SOUPAPE DE SURFACE ACCRUE

(30) Priority: 08.10.2003 US 681762
(43) Date of publication of application: 19.07.2006
(73) Proprietor: CARRIER CORPORATION, Farmington, Connecticut 06034-4015 (US)
(72) Inventor: NEITER, Jeffrey, J., Coventry, CT 06238 (US)
(74) Representative: Booth, Catherine Louise
(86) International application number: PCT/US2004/033363
(87) International publication number: WO 2005/035948

(56) References cited:
- US-A- 5 672 053
- US-A1- 2002 119 059
- US-B1- 6 318 980

## Description

This invention relates to a discharge valve and valve seat for a reciprocating compressor wherein the area inward of the valve seat is significantly larger than the area of the port leading to the discharge valve.

Reciprocating compressors typically include a piston movable within a cylinder. A valve plate at one end of the cylinder selectively allows a fluid to be compressed to flow into the cylinder through an inlet valve. The valve plate also includes a discharge valve to control the flow of the compressed fluid outwardly of the cylinder. In one common arrangement of the valve plate, the inlet valve is positioned at a radially outer location on the cylinder, while the discharge valve is positioned at a central location. The discharge valve is on an outer surface of the valve plate. A discharge port leads through the valve plate to the discharge valve. Typically, the discharge valve seats against a valve seat on the valve plate. The valve seat has typically surrounded the discharge port; such that an area defined inward of the valve seat is equal to or slightly larger than the area of the discharge port.

There are trade-offs in the design of the discharge valve for such compressors. In particular, the area of the discharge port is proportional to a quantity known as "flow loss." Flow loss represents a decrease in efficiency in that it represents fluid which has been compressed but which is not driven outwardly of the cylinder to a downstream use. That is, fluid in the discharge port at the time the piston reaches the end of its stroke is not driven further outwardly of the discharge valve. All of the energy put into this compressed fluid is "lost." For this reason, it is not beneficial to excessively increase the size of the discharge port.

On the other hand, it is the area within the valve seat that controls the amount of force applied from the compressed fluid to open the discharge valve and allow flow of the fluid outward of the chamber. In certain applications, it would be desirable to increase this force without dramatically increasing the pressure of the compressed fluid.

To date, the designers of reciprocating compressors have chosen some relative equal value for the area within the valve seat and the area of the discharge port based upon an evaluation of the applications to which the reciprocating compressor will be utilized. In fact, since many compressors are utilized across a wide range of operational applications, this trade off may not always be as beneficial as would be desired. The problem becomes particularly acute when an unique refrigerant such as CO₂ is utilized in a refrigerant cycle.

US 6,318,980 B1 describes a refrigerant compressor with features as set out in the preamble of claim 1.

### SUMMARY OF THE INVENTION

The invention is set out as claimed in claim 1. In disclosed embodiments of this invention, the valve scat is moved radially outwardly of the discharge port by a significant amount such that the area over which the compressed refrigerant is driven to open the discharge valve is significantly greater than the area of the discharge port. In this way, an increased force to open the discharge valve is achieved without significantly increasing the flow loss.

In a disclosed embodiment of this invention, the increased area is at least equal to the area of the discharge port. That is, the area inward of the valve seat is at least twice the area of the discharge port. In this way, the force on the valve is at least doubled without any significant increase in flow loss.

The valve seat has a shape that is distinct from the shape of the discharge port. In this manner, the area can be increased within the available space on the valve plate.

These and other features of the present invention can be best understood from the following specification and drawings, the following of which is a brief description.

### BRIEF DESCRIPTION OF THE DRAWINGS

Figure 1A is a cross-sectional view through a prior art compressor.

Figure 1B shows the prior art discharge valve.

Figure 2A is a cross-sectional view through a compressor.

Figure 2B is a top view of a discharge valve.

Figure 3A is a cross-sectional view through an embodiment of a compressor in accordance with the invention.

Figure 3B is a top view of the discharge valve of Figure 3A.

### DETAILED DESCRIPTION OF THE PREFERRED EMBODIMENT

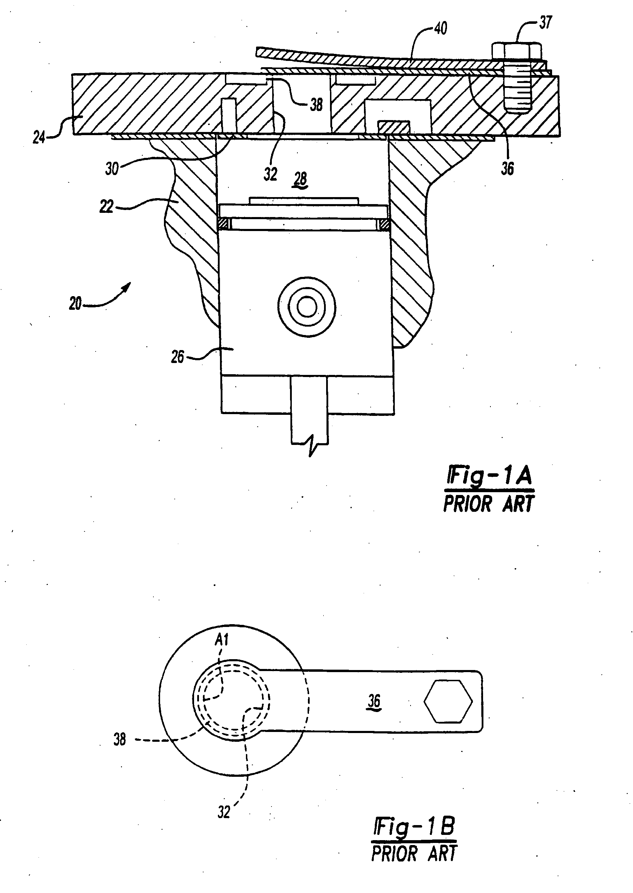

As shown in Figure 1A, and as known in the prior art, a compressor 20 includes a cylinder head 22 and a valve plate 24. A piston 26 moves within the cylinder head 22 to compress a fluid received in a cylinder chamber 28. An inlet valve 30 selectively allows the flow of the fluid into the chamber 28. A discharge port 32 leads to a discharge finger valve 36. As known, the discharge finger valve 36 is pinned at one end 37 such that it may flex away from the port 32 and allow flow of the compressed refrigerant outwardly of the port 32. A stop 40 prevents undue movement of finger valve 36. The discharge valve 36 seats against a valve seat 38.

As can be appreciated from Figure 1B, the area A1 inward of the valve seat 38 is equal to the area within the discharge port 32. Thus, the compressed fluid acting to open the discharge valve 36 is across an area equal to the area of the discharge port. The trade-off between losses and potentially low opening force, as mentioned above, are experienced by this prior art compressor.

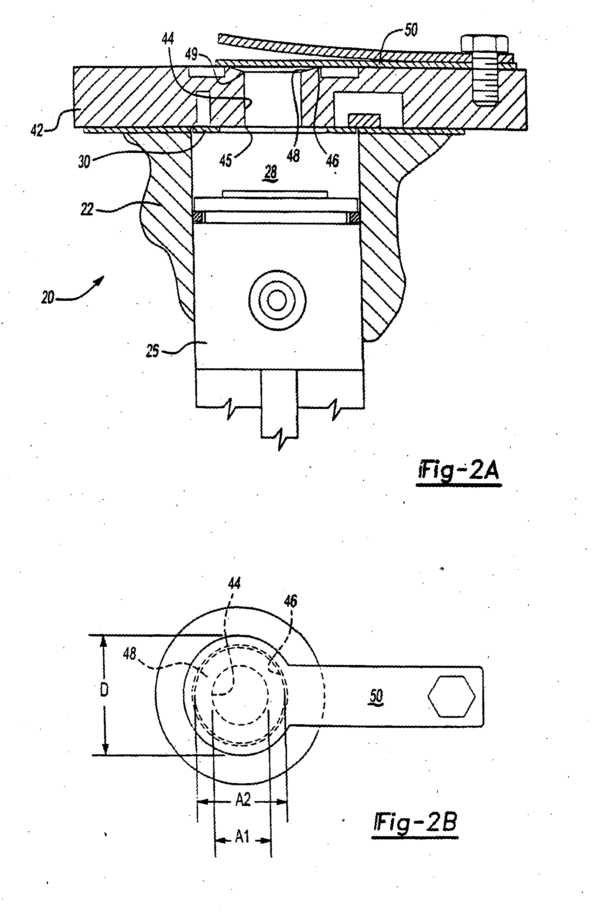

Figure 2A shows a compressor valve plate 42 that does not fall within the scope of the present invention. The discharge port 44 has an area 45 at the end that communicates with the chamber 28 that is significantly smaller than the area inward of the valve seat 46. Again, a discharge finger valve 50 seats against the valve seat 46. However, a ramped increasing area 48 extends radially outwardly between an end 49 of the smaller discharge port area and the valve seat 46.

As shown in Figure 2B, there is now a significant increased area A2 which is significantly greater than the area of the discharge port A1. In preferred embodiments of the invention, this increase in area is at least equal to the nominal area of the discharge port A2. Thus, there is a significant increase in the force on the valve 50 trending to open the valve. Further, there is only a nominal increase in the fluid losses in that the increase in area is only over a very small volume past the end 49 of the nominal discharge port area A1.

The outside area of the valve D also limits somewhat the shape of the valve seat in that this area cannot be so great as it begins to impinge upon the surrounding structure. Aspects of the above invention, such as the distinct shape for the valve seat, allow tailoring of the outside area of the valve D to accommodate the other components that must extend within the valve plate.

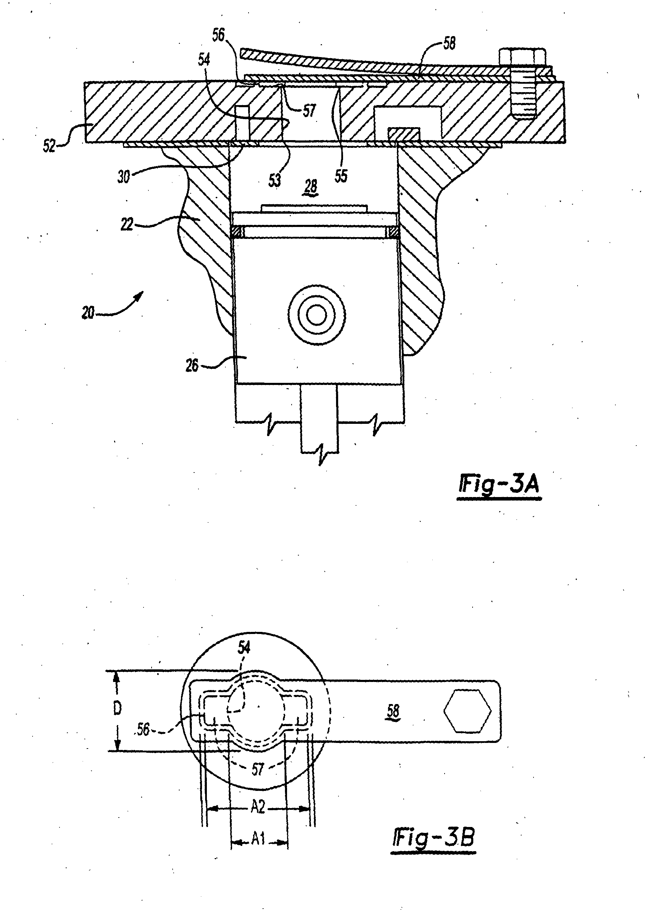

Figure 3A shows an embodiment of the invention with a valve plate 52 and having a discharge port 54 extending between ends 55 and 53. The valve scat 56 is positioned adjacent the end 55. There is an increased area shown at 57 in the Figure 3A which acts on the valve 58. As can be appreciated from Figure 3B, the shape of the valve seat 56 differs markedly from the shape of the discharge port 54. Thus, there is a significant increase in the area through which a fluid acts on the valve 58 to open the valve with only a small increase in the flow losses. The shape shown in Figure 3B has ears 57 at each side of the port 54 defining additional flow areas 57.

The compressor is preferably utilized to compress a refrigerant for a refrigerant cycle, and most preferably to compress an unique refrigerant such as CO₂.

A preferred embodiment of this invention has been disclosed, however, a worker of ordinary skill in the art would recognize that certain modifications would come within the scope of this invention. For that reason, the following claims should be studied to determine the true scope and content of this invention.

## Claims

1. A compressor comprising:
a cylinder head (22) defining a chamber (28), and a valve plate (52) mounted at an end of said cylinder head (22);
a piston (26) reciprocating within said cylinder head (22) toward and away from said valve
plate (52);
an inlet valve (30) for allowing flow of a fluid into said chamber (28); and
a discharge valve (58) for selectively allowing flow of a compressed fluid outwardly of said chamber (28), said discharge valve (58) being positioned at an opposed end of a discharge port (54) from said chamber (28), said discharge port (54) having a first cross-sectional area (A1), said discharge valve (58) being pinned at one end to flex away from said discharge port (54) in response to a force from the compressed fluid, and said discharge valve (58) seating on a valve seat (56) on said valve plate (52), an area (A2) defined inwardly of said valve seat (56) is greater than said first cross-sectional area (A1); **characterised in that**:
said valve seat (56) defines a shape inward of said valve seat (56) which is distinct from a shape of said area (A1) of said discharge port (54); and,
said valve seat (56) has a central circular area (A1) with two opposed ears (57) extending radially outwardly from said circular area (A1) to define said increase in area over said first cross-sectional area (A1).

2. A compressor as recited in Claim 1, wherein said inlet valve (30) is also mounted on said valve seat (56).

3. A compressor a recited in Claim 2, wherein said inlet valve (30) is positioned radially outwardly of said discharge valve (58), with said discharge port (54) generally being positioned near the center of said chamber (28).

4. A compressor as recited in Claim 2 or 3, wherein said area (A2) within said valve seat (56) is greater than said area (A1) of said discharge port (54) by at least 200%.

## Patentansprüche

1. Verdichter, aufweisend:
einen Zylinderkopf (22), der eine Kammer (28) bildet, und eine Ventilplatte (52), die an einem Ende des Zylinderkopfes (22) angebracht ist;
einen Kolben (26), der in dem Zylinderkopf (22) zu der Ventilplatte (52) hin und von dieser weg beweglich ist;
ein Eintrittsventil (30), um ein Fluid in die Kammer (28) einströmen zu lassen; und
eine Austrittsventil (58), um eine Strömung eines verdichteten Fluids aus der Kammer (28) in selektiver Weise zuzulassen, wobei das Austrittsventil (58) an eingem gegenüberliegenden Ende von einer Austrittsöffnung (54) aus der Kammer (28) positioniert ist, wobei die Austrittsöffnung (54) eine erste Querschnittsfläche (A1) aufweist, wobei das Austrittsventil (58) an einem Ende festgelegt ist, so dass es sich in Abhängigkeit von einer Kraft von dem verdichteten Fluid von der Austrittsöffnung (54) weg biegt, und wobei das Austrittsventil (58) auf einen Ventilsitz (56) an der Ventilplatte (52) aufsetzt, wobei eine innerhalb von dem Ventilsitz (56) gebildete Fläche (A2) größer ist als die erste Querschnittsfläche (A1);
**dadurch gekennzeichnet, dass** der Ventilsitz (56) eine Formgebung im Inneren von dem Ventilsitz (56) bildet, die sich von einer Formgebung der Fläche (A1) der Austrittsöffnung (54) unterscheidet; und dass der Ventilsitz (56) eine zentrale kreisförmige Fläche (A1) mit zwei einander gegenüberliegenden Fortsätzen (57) aufweist, die sich von der kreisförmigen Fläche (A1) radial nach außen erstrecken und **dadurch** eine Vergrößerung der Fläche gegenüber der ersten Querschnittsfläche (A1) bilden.

2. Verdichter nach Anspruch 1,
wobei das Eintrittsventil (30) ebenfalls an dem Ventilsitz (56) angebracht ist.

3. Verdichter nach Anspruch 2,
wobei das Eintrittsventil (30) radial außenseitig von dem Austrittsventil (58) angeordnet ist, wobei die Austrittsöffnung (54) im Wesentlichen in der Nähe der Mitte der Kammer (28) angeordnet ist.

4. Verdichter nach Anspruch 2 oder 3,
wobei die Fläche (A2) innerhalb des Ventilsitzes (56) um mindestens 200 % größer ist als die Fläche (A1) der Austrittsöffnung (54).

## Revendications

1. Compresseur comprenant :
une culasse (22) définissant une chambre (28) et une plaque porte-soupape (52) montée au niveau d'une extrémité de ladite culasse (22) ;
un piston (26) effectuant un mouvement de va et vient dans ladite culasse (22) vers et à distance de ladite plaque porte-soupape (52) ;
une soupape d'entrée (30) pour permettre l'écoulement d'un fluide dans ladite chambre (28) ; et
une soupape de décharge (58) pour permettre sélectivement l'écoulement d'un fluide comprimé vers l'extérieur de ladite chambre (28), ladite soupape de décharge (58) étant positionnée au niveau d'une extrémité opposée d'un orifice de décharge (54) par rapport à ladite chambre (28), ledit orifice de décharge (54) ayant une première surface transversale (A1), ladite soupape de décharge (58) étant placée au niveau d'une extrémité pour fléchir à distance dudit orifice de décharge (54) en réponse à une force provenant du fluide comprimé, et ladite soupape de décharge (58) étant installée sur un siège de soupape (56) sur ladite plaque porte-soupape (52), une surface (A2), définie vers l'intérieur dudit siège de soupape (56) étant supérieure à ladite première surface transversale (A1) ; **caractérisé en ce que** ledit siège de soupape (56) définit une forme vers l'intérieur dudit siège de soupape (56) qui est différente d'une forme de ladite surface (A1) dudit orifice de décharge (54) ; et ledit siège de soupape (56) a une surface circulaire centrale (A1) avec deux oreilles opposées (57) s'étendant radialement vers l'extérieur à partir de ladite surface circulaire (A1) pour définir ladite augmentation de surface sur ladite première surface transversale (A1).

2. Compresseur selon la revendication 1, dans lequel ladite soupape d'entrée (30) est également montée sur ledit siège de soupape (56).

3. Compresseur selon la revendication 2, dans lequel ladite soupape d'entrée (30) est positionnée radialement vers l'extérieur de ladite soupape de décharge (58) avec ledit orifice de décharge (54) qui est positionné à proximité du centre de ladite chambre (28).

4. Compresseur selon la revendication 2 ou 3, dans lequel ladite surface (A2) à l'intérieur dudit siège de soupape (56) est supérieure à ladite surface (A1) dudit orifice de décharge (54) d'au moins 200 %.
